# EUROPEAN PATENT APPLICATION

(11) **EP 2 244 325 A2**
(43) Date of publication of application: **27.10.2010**
(21) Application number: 09169525.4
(22) Date of filing: 04.09.2009
(51) Int. Cl.: H01M 8/02

(54) **Fuel cell comprising a crimped flow-field plate**

(30) Priority: 20.04.2009 DE 102009017779
(71) Applicant: Ritter Elektronik GmbH, 42897 Remscheid (DE); Fachhochschule Gelsenkirchen, 45877 Gelsenkirchen (DE); Propuls GmbH, 46240 Bottrop (DE); Gräbener Maschinentechnik GmbH & Co. KG, 57250 Netphen - Werthenbach (DE)
(72) Inventor: Gräbener, Theodor R., Dr., 57234 Wilnsdorf (DE); Fritz, Werner, Dr., 76297 Stutensee (DE); Kapp, Dieter, 57234 Wilnsdorf (DE)
(74) Representative: Taruttis, Tilman

(57) **Abstract**

A fuel or reformer cell (100) comprising a two opposing flow-field plates (130b,130a) is described wherein a boundary area (150b) of a flow-field plate (130b) is spun over or crimped to at least partially encompass the boundary area (150a) of the opposing flow-field plate (130a). The cell (100) optionally may comprise sealant lines (180a-180d) arranged between the boundary areas (150a,150b) or at least one isolating frame (140) at least partially encompassed by the spun-over or crimped boundary area (150b).

## Description

The invention relates to a fuel cell or a reformer cell comprising crimped or spun-over flow-field plates. Particularly the invention relates to a reformer or fuel cell comprising two opposing flow-field plates, wherein a boundary area of a flow-field plate is crimped or spun-over to at least partially encompass the opposing flow-field plate.

Fuel cells are devices for converting energy of a chemical reaction into electricity. When operating, a fuel and an oxidant are steadily supplied to the cell. Fuel and oxidant react in the presence of an electrolyte, such that the cell produces electrical current at its anode side and outputs a reaction product at its cathode. A single conventional fuel cell typically produces a low voltage, i.e. typically in the range from 0.5 Volts to 1.2 Volts, at a comparatively high current, wherein the current depends on the size of the reaction area, i.e. theoretically up to 3 Amperes per square centimetre (3A/cm²) of active area in the cell. As the active area, i.e. the area of the membrane electrode assembly in a modern fuel cell, may easily exceed an area of 100cm², a single cell theoretically may output a current of up to 300 A at a low voltage of typically below 1.0 Volts. Technically these high currents at a low voltage are difficult to handle, since the voltage of one fuel cell is to low for modern applications.

For generating higher voltages in conventional fuel cell systems a plurality of cells are connected in series, the voltages of the cells thus adding. Further to being electrically coupled the cells are connected in series with respect to the supply of fuel and an oxidant, the draining fuel line of one cell being the supply line of a next cell. Similarly the fuel cells may be connected in series with respect to the oxidant.

Conventional fuel cells typically are of flat, planar shape and in many cases exhibit a rectangular shape. Conventionally a serial connection of a plurality of fuel cells forms a stack, wherein the flat fuel cells are stacked one upon another thus forming a cuboid having the footprint of a single fuel cell and the height corresponding to the number of stacked fuel cells. Said stack of fuel cells thus forms an easy to handle plurality of fuel cells providing a high output current at a convenient voltage. The fuel cells of said stack conventionally are firmly connected in order to apply a mechanical pressure onto the fuel cells and in order to provide a sufficient mechanical strength to the compound of fuel cells.

In a conventional stack of fuel cells the cells are in a more or less tight assembly. Usually the cells are pressed onto each other. Each fuel cell in the stack accordingly is compressed, i.e. a compression force is applied to the sidewalls of a cell from its neighbouring cells. Said compression force can be applied for example by a plurality of screws or bolts attached at least to the first and last cell of the stack. Said compression force effectuates also a contact pressure of the outermost plates of a cell, usually the flow-field plates, wherein said compression force is also applied to the boundary of a cell. Accordingly said compression force in combination with a circumferential sealing is conveniently used to effectuate a sealing of the inner volume of the cell, such that neither fuel nor oxidant may leave the cell. Furthermore said assembly of a plurality of cells in a stack may also effectuate a mechanical fixation of each individual fuel cell.

The stack in this way enables operating the fuel cells. Vice versa a single fuel cell requires the mechanical impact of the stacking for being operable, i.e. the contact pressure of the stack on its boundary for sealing the cell.

So for enabling a fuel cell to be operated as a standalone cell, i.e. without being embedded in a stack of fuel cells, an alternative solution is required for mechanically connecting the flow-field plates of a cell and which preferably provides a sealing of the cell.

### Brief description of the figures

In the following the invention is disclosed with respect to the accompanying figures, wherein
- Fig. 1: depicts a schematic cross sectional view through a first embodiment of a fuel cell;
- Figs. 2a, b: depict schematic cross sectional views of embodiments comprising lines of sealant;
- Figs 3a, b: depict schematic cross sectional views of embodiments comprising an isolation frame.

The following description particularly relates to a fuel cell. Taking into account that a reformer cell, which can be considered to be a reverse fuel cell, may have a similar design with similar requirements, the invention as described in the following with regard to a fuel cell, can be easily applied to a reformer cell. Hence, the invention also relates to and is disclosed for a reformer cell.

Note that all figures are not drawn to scale. Instead they are intended to illustrate the arrangement of the drawn elements relative to each other.

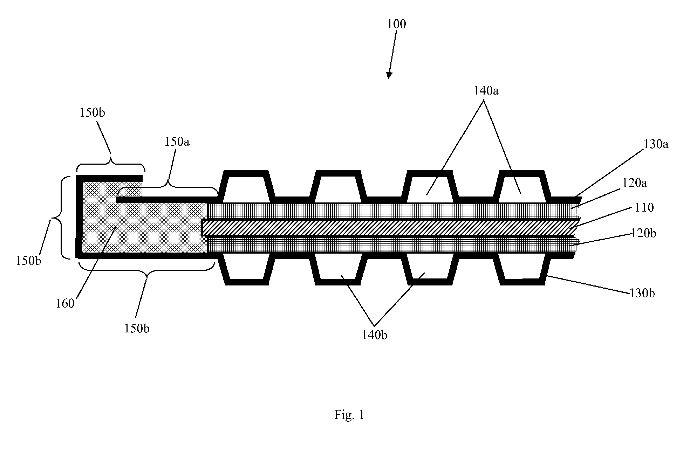

Figure 1 schematically depicts a cross sectional view of a fuel cell 100, wherein the depicted fuel cell may be of any arbitrary fuel cell type. In order to elucidate the technical background of the invention, the described embodiment relates to any fuel cell comprising a proton-exchange-membrane, abbreviated as PEM, and at least one gas diffusion layer, abbreviated GDL, and a pair of flow-field plates surrounding these layers. Generally the fuel cell may be a low temperature or high temperature fuel cell PEM, which may be fuelled by hydrogen and oxygen or air, i.e. the oxygen from the air; or the fuel cell may be a so-called direct methanol fuel cell (DMFC), which is fuelled by methanol and oxygen, or the oxygen comprised in the air; or the fuel cell may be of any other type.

The depicted fuel cell comprises a membrane proton exchange membrane 110, which adjoins at both of its sides to gas diffusion layers (GDLs) 120a, 120b, which in turn adjoin to a first flow-field plate 130a and a second flow-field plate 130b at their outer faces.

In operation, for example when considering a so-called proton exchange membrane fuel cell (PEMFC), the cell may be fuelled with hydrogen and air, wherein hydrogen is supplied to the anode side and oxygen or air as oxidant is supplied to the cathode side. Note that PEM in some literature abbreviates "polymer electrolyte membrane", wherein said membrane fulfils the purpose of the semi-permeable membrane. Note that in the depicted embodiment fuel may be supplied to flow through flow-field channels 140a and oxidant may be supplied to the cell to flow through flow-field channels 140b, i.e. flow-field plate 130a being on the anode side and plat 130b being on the cathode side. Note that anode and cathode side may be interchanged easily by interchanging the supply of fuel and oxidant.

In the depicted embodiment flow-field plate 130a may serve as anode and flow-field plate 130b may serve as cathode, i.e. for collecting the electrons produced by ionizing the fuel and conducting electrical current.

When operating the cell, the fuel and oxidant are supplied with excess pressure to channels 140a and 140b respectively in order to allow a steady flow of fuel and oxidant through the cell. Said excess pressure typically is in the range 0.5 to 1.5 atmospheres. To prevent an undesired loss of fuel and/or oxidant, the inner volume of the cell must be sealed from the surrounding atmosphere, i.e. the circumferential edge of a fuel cell must be sealed. Furthermore the parts of the fuel cell, i.e. at least the outermost parts, i.e. the flow-field plates must be mechanically locked into position.

The sealing at the boundary area of the cell and mechanical locking of the flow-field plates of a cell can be achieved by crimping or spinning over the boundary area 150b of flow-field plate 130b to encompass at least partially the boundary area 150a of the opposing flow-field plate 130a. Note that in the depicted figure the boundary area 150b of flow-field plate 130b comprises the lower horizontal portion 150b, the vertical portion and the upper horizontal portion 150b arranged above the boundary area 150a of flow-field plate 130a.

By encompassing boundary area 150a plate 130b clasps plate 130a. In this way the encompassing boundary area 150b forms a tight mechanical coupling between the two opposing flow-field plates 130a and 130b respectively.

In one embodiment and as depicted in the figure, both flow-field plates 130a, 130b serve as electrodes, i.e. as explicated above flow-field plate 130a serves as anode while flow-field plate 130b serves as cathode respectively. In order to prevent a short between plates 130a, 130b, at least one electrically isolating layer 160 is arranged between boundary area 150a and 150b respectively. Said isolating layer may be of any suitable isolating material. Preferably said material may be gas-tight, isolating layer 160 thus also serving as a sealing for preventing leakage of the supplied fuel, oxidant or the reaction product produced when operating the cell. In one embodiment isolating layer 160 may be a plastic film being electrical isolating and resistant to temperature, mechanical stress when bending and chemical stress caused by the fuel and oxidant. Advantageously said isolating layer exhibits good thermal conductivity, such that isolating layer 160 supports the dissipation of heat to the boundary areas thus improving thermal properties of the cell. In one particular embodiment isolating layer 160 may be a polyimide film, for example Kapton® film as produced by DuPont.

Generally the fuel cell may have any arbitrary shape, wherein "shape" relates to the essentially two-dimensional shape of a fuel cell, including any rectangular, rounded or circular shape.

When producing a fuel cell 100 comprising a crimped or spun-over boundary area, production starts from a flow-field plate 130b exhibiting a flat boundary area 150b. Said boundary area 150b is then spun over or crimped when all functional layers, i.e. gas diffusion layers 120a, 120b and membrane 110 as well as the opposing flow-field plate 130a are arranged on plate 130b. The process of spinning over boundary area 150b to encompass boundary area 150a can be accomplished in a single or a plurality of bending steps. Particularly for straight bending edges, i.e. if flow-field plate 130b exhibits a boundary area having a straight bending edge, the boundary area may be spun over in a single bending step. For rounded bending edges, i.e. in case flow-field plate 130b exhibits a curved bending edge, the process of crimping the boundary area may comprise a plurality of bending steps, wherein the boundary area may be curved stepwise.

In one embodiment encompassing boundary area 150b may comprise an essentially vertical portion adjoining a terminating horizontal portion arranged on top of boundary area 150a as depicted in the figure. Said embodiment preferably may be produced deploying a first production step for spinning over boundary area 150b to form a vertical portion, which in a second production step is spun over to form the horizontal portion arranged on top of boundary area 150a. Producing said encompassing boundary area 150b accordingly can be achieved by two bending steps, wherein these steps are easy to control since each bending step essentially is a rectangular bending exhibiting a comparatively small bending radius. However said small bending radius may weaken the rigidity of the flow-field plate.

The flow-field plates may comprise at least one metal layer, which allows the processing step of spinning over or crimping boundary area 150b. Note that this particularly relates to flow-field plate 130b, but not necessarily is valid for plate 130a since that plate is not spun over or crimped at its boundary area 150a. In one embodiment the flow-field plate may be produced from steel, particularly corrosive-resistant steel. In alternative embodiments the flow-field plate may exhibit a layered structure comprising at least two layers of different material. In one particular embodiment the flow-field plate may comprise a layer of steel and a coating of nickel at least on the flow-field side of the plate, wherein the steel layer essentially may provide the mechanical properties of the flow-field plate such as mechanical stability, rigidity and geometrical shape of the plate including the flow-field design. The steel layer may be nickelized during production to provide the coating of nickel. In still another alternative the flow-field plate may comprise a layer for improving electrical conductivity, i.e. a layer of copper. Said layer may be applied to the outside of the plate and/or below the optional nickel coating. In still another alternative the flow-field plate may be produced from graphite or from a hybrid material comprising a metal and graphite, i.e. a composite material, may be used or may comprise a layer of graphite for incorporating graphite specific properties into the flow-field plate. In this way the flow field plate may comprise at least one material layer providing mechanical stability and a plurality of optional layers or coatings for improving electrical or chemical properties of the plate.

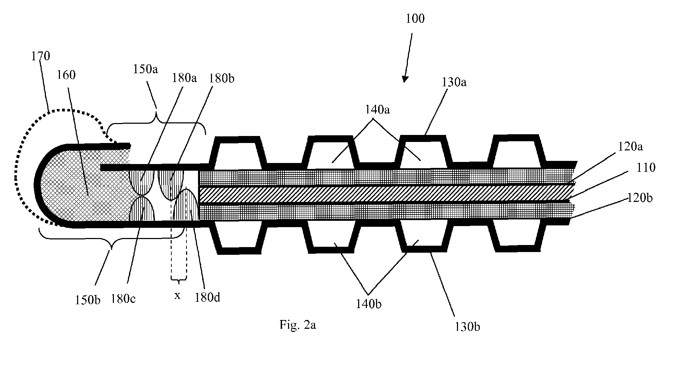

Fig. 2a depicts an alternative embodiment of a fuel cell. Similar as described with reference to fig.1 the cell comprises a membrane 110 and gas diffusion layers 120a and 120b respectively.

Furthermore the cell comprises a first and a second flow-field plate 130a, 130b comprising boundary areas 150a and 150b respectively. The flow-field plates may exhibit the properties as described above and may serve as anode and cathode. Accordingly the plates are electrically isolated by at least one isolating means 160.

In this embodiment boundary area 150b is spun over or crimped to at least partially encompass boundary 150a, wherein the spinning over or crimping is formed by a single bending having a radius being significantly larger than in the embodiment of fig. 1. The mechanical stress on boundary area 150b caused by crimping said area is considerably smaller, since the bending radius is larger. Flexural cracks typically decrease with increasing bending radius. Consequently this bending is less prone to damaging the boundary area 150b of flow-field plate 130b. Furthermore the larger bending radius also decreases the mechanical stress on isolating layer 160. In particular a larger bending radius may prevent a damaging of an isolating foil since a smaller radius gently directs the foil around the edge of boundary area 150a. In particular in case the edge of boundary area 150a, i.e. the edge of the boundary area being encompassed by boundary area 150b and isolating layer 160, shows a sharp edge that might cut isolating layer 160, isolating layer is less prone to being cut and damaged, since a larger bending radius reduces the pressure on the layer 160 in the vicinity of the edge of the encompassed boundary area 150a.

To further minimize the mechanical stress on the encompassing boundary area 150b and isolating layer 160, the bending radius can be increased as shown by dotted line 170. The bending may accordingly form a bulge, which in its height exceeds that of the opposing flow-field plates. Since the radius of said bulge is even larger, the mechanical stress on boundary area 150b and isolating layer 160 is further reduced. Optionally the cell may further comprise at least one circumferential sealing means for at least improving the gas-tight sealing between flow-field plates 130a and 130b respectively. The depicted embodiment accordingly comprises a first sealing means 160 and at least one second sealing means 180. Actually, the depicted embodiment of cell 100 comprises four second sealing means 180a - 180d.

Second sealing means may be a line of gas-tight material being more flexible than said first sealing means. Said gas-tight sealing material may be also electrically isolating. In one embodiment said second sealing means may be silicone-based or a silicone derivative, which may be applied to a flow-field plate as a line of a flexible sealant. The material of said second sealing means optionally may be sticky thus exhibiting adhesive properties, thus enabling an easy placement and enhancing the sealing properties.

In one embodiment said at least one second sealing means initially may be applied to one of the flow-field plates, wherein on assembly of the fuel cell said sealing means also touches the opposing flow-field plate in order to form a sealing between the plates. Alternatively said second sealing means can be applied as a first line of sealing material on a flow-field plate and a second line of sealing material on the opposing, second flow-field plate, wherein the two lines of sealing material join on assembly of the fuel cell. Note that the two lines of sealing material may be placed on the flow-field plates on exactly opposing positions as illustrated by 180a and 180c respectively.

Alternatively the two opposing lines of sealing material may be arranged horizontally misaligned as depicted with sealing means 180b and 180d respectively. The misalignment x is chosen such that sealing means 180b physically touches sealing means 180d when assembling the cell, thus forming an interlaced sealing between the opposing flow-field plates. Note that - contrary as drawn in the figure - there is no free space between the lines of sealing material 180a - 180d, since the lines will be squeezed when assembling the cell, the deformation of the sealing lines thus filling any free spaces in the vicinity of membrane 110 and gas diffusion layers 120a, 120b.

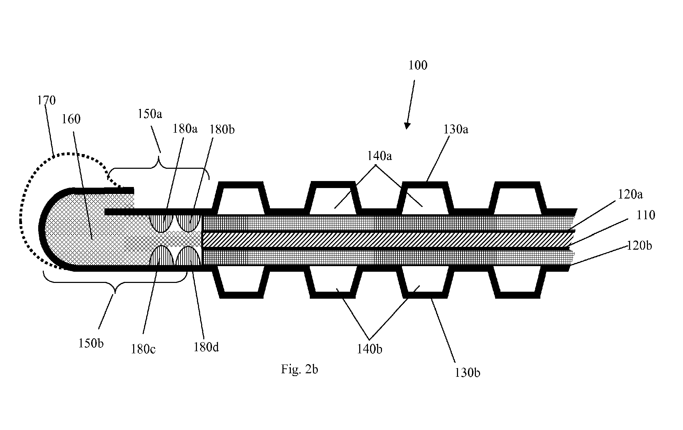

Figure 2b discloses an alternative arrangement of the cell, which essentially comprises the same elements as described above. In contrast to the embodiment depicted in fig. 2a, second sealing means in this embodiment attach to the first isolating/sealing means 160, which in turn adjoins membrane 110 and/or gas diffusion layers 120a, 120b respectively. Again, note that due to the squeezing of the sealing lines 180a - 180d there is no free space between said sealing lines once the cell is assembled. Accordingly in the embodiment as depicted in fig. 2b isolating means 160 is arranged over the entire area between boundary area 150a and 150b.

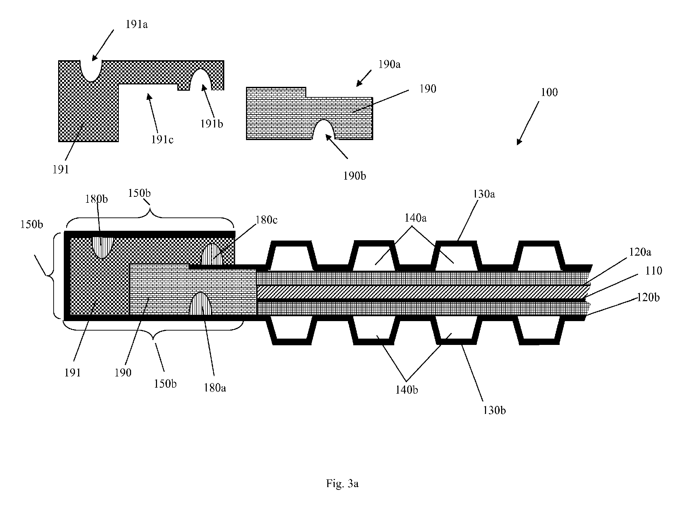

Figure 3a depicts an alternative embodiment of the cell 100 comprising at least one circumferential isolation frame 190, said circumferential isolation frame encompassed at least partially by the spun-over or crimped boundary area 150b of flow-field plate 130b.

Isolation frame 190, which is also depicted as a separate item in the figure, encircles membrane 110 and gas diffusion layers 120a, 120b as well as flow-field plate 130a. Isolation frame 190 may serve as a retaining fixture for keeping the membrane and gas diffusion layers as well as flow-field plate 130a in its relative geometrical position when assembling the cell.

Frame 190 is of any isolating material, which preferably can be processed easily to achieve the desired design. In one instance the isolating material may be plastics or synthetics. Accordingly frame 190 will also help to electrically separate, i.e. isolate, the two opposing flow-field plates 130a, 130b.

Optionally frame 190 exhibits a first recess 190a at one side for holding one of the flow-field plates, i.e. for holding the boundary area 150a of flow-field plate 130a. Said recess 191 may have a horizontal extension being essentially the same as boundary area 150a of flow-field plate 130a, wherein its vertical extension, i.e. the depth of the recess, essentially equals the thickness of the flow-field plate.

Further optionally frame 190 may exhibit another recess 190b for taking a sealing 180a, which preferably is gas-tight and effectuates a gas-tight barrier between frame 190 and the adjoining element. Said sealant preferably is flexible and exhibits the properties as mentioned above for a sealing line, wherein the sealant is squeezed into the designated recess 190b upon assembly of the cell, thus forming a form-locking sealing.

In addition to the at least one sealing line 180a the cell may comprise further sealing lines 180b and 180c to further seal the cell.

In addition to first isolation frame 190 the cell may comprise a second isolation frame 191, which in fig. 3a also is drawn as a separate item. Both isolation frames, i.e. 190 and 191 respectively, are at least partially encompassed by spun-over or crimped boundary area 150b. Note that in the depicted embodiment boundary area 150b of flow-field plate 130b comprises a first horizontal portion, an adjoining vertical portion, which in turn adjoins to the second horizontal portion arranged on top of the first and/or second isolation frame 190, 191.

Second isolation frame 191 may be made of a similar material as first isolation frame 190. Also, frame 191 may exhibit at least one recess 191a, 191b, for taking lines of sealing material as described above for recess 190b. In the depicted embodiment the recesses are arranged such that corresponding sealing lines 180b and 180c attach to the boundary areas 150a and 150b respectively. However, in order to achieve a gas-tight sealing of the cell, in one embodiment - not depicted in the drawing - a sealing line may be arranged between the first and second isolation frames 190 and 191 respectively.

In addition to the recesses provided for taking a line of sealing material, second isolation frame 191 may exhibit a recess 191c for taking first isolation frame 190. In the depicted embodiment second isolation frame encompasses first isolation frame 190 at least partially. In particular, second isolation frame 191 attaches to two sides of frame 190, i.e. frame 191 attaches to the outer vertical lateral surface and to the top surface of frame 190, wherein in this particular embodiment the top surface of frame 190 fits into the optional recess 191 c of frame 191.

The first and second isolation frames may support the assembly of cell. In one example the assembly of cell 100 starts by positioning isolation frame 190 on flow-field plate 130b. Note that at the beginning of the assembly the boundary area 150b of flow-field plate 130b still is straight flat, i.e. the steps of spinning-over or crimping the boundary area are performed at a later processing stage. Subsequently the lower gas diffusion layer 120b, membrane 110 and the upper gas diffusion layer 120a, or a corresponding membrane-electrode-assembly i.e. a so-called MEA, are placed on flow-field plate 130b, wherein layers 120a, 120b and the membrane are placed within first isolation frame 190. Since frame 190 is dimensioned to preferably exactly take the inner functional layers of the fuel cell, the frame supports the assembly by alleviating the centric positioning of the layers in relation to each other. When all inner layers of the cell are placed, flow-field plate 130a may be put on top. In the depicted embodiment isolation frame 190 exhibits a recess 190a for taking flow-field plate 130a, thus enabling to also support the centric position of flow-field plate 130a relative to layers 120a, 120b and 110. In this way frame 190 alleviates the exact positioning of the elements of the fuel cell.

Optionally a second isolation frame 191 can be placed on flow-field plate 130b, wherein said second frame attaches to first frame 190 and to the boundary areas 150a and 150b of the flow-field plates as well.

Subsequently boundary area 150b of flow-field plate 130b is spun over or crimped such that boundary area 150 encompasses first and second frames 190 and 191. In this way the spun-over or crimped boundary area 150b constitutes the relative positioning of the elements of cell 100.

Further to fixing the position of the cell elements, the first frame supports the assembly of the cell elements in that it alleviates the shaping of the spinning-over or crimping, since the outer frame purports the shape of the crimped or spun-over boundary area 150b. That is, by designing the outer contour of the outer frame, the bending of boundary area 150b can be defined. In this way a bending radius can be defined more exactly than without a frame. With regard to the matter of a bending radius it is noted that the outer edges of the outer frame may be rounded.

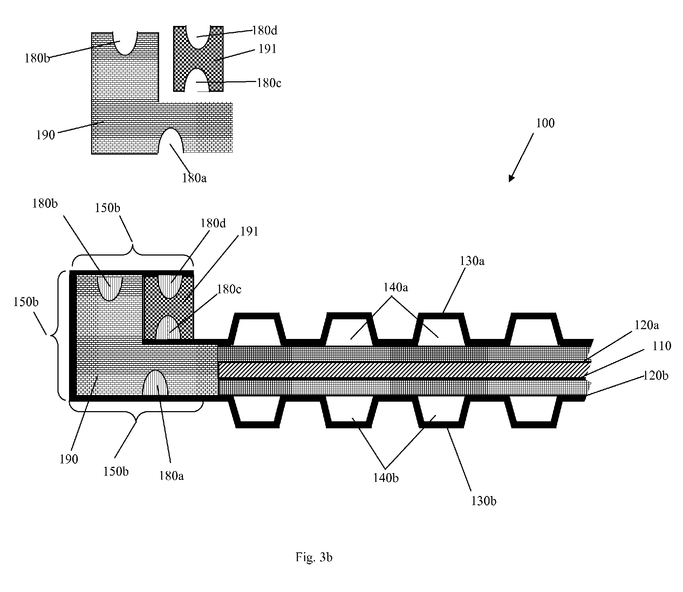

Figure 3b depicts a cross sectional view through an alternative embodiment of a fuel cell comprising a first and a second isolation frame 190 and 191 respectively, wherein first isolation frame 190 exhibits a recess 190a for taking boundary area 150a of plate 130a and for taking second isolation frame 191. Cross sectional views of first and second isolation frames 190, 191 are depicted separately in the figure. Note that the numbering of the frames, i.e. first and second frame, is deduced from the order in which the frames are processed when assembling the cell.

Accordingly, in this embodiment assembly of the fuel cell starts with placing first frame 190 on flow-field plate 130b. In particular first frame 190 is placed on flow-field plate 130b, i.e. on boundary area 150b of plate 130b. Note that boundary area 150b at this processing stage is not spun-over or crimped but flat. In subsequent processing steps and similar as described above gas diffusion layer 120b, membrane 110 and gas diffusion layer 120a are placed on flow-field plate 130b and within frame 190, wherein frame 190 supports the positioning of the diffusion layers 120a, 120b and membrane 110. Subsequently flow-field plate 130a is placed on gas diffusion layer 120a and in recess 190a of frame 190. Lastly boundary area 150b is spun-over or crimped to encompass first frame 190 and second frame 191.

Note that the frames may exhibit further recesses 190b, 190 and 191 a, 191 b for taking lines of sealing in order to seal cell 100, wherein in particular sealing lines 180c and 180d provide a gas-tight sealing of the cell.

With regard to the application of the lines of sealant it is noted that these lines of sealant can be die cast into the recesses of a frame before said frame is integrated into the cell upon assembly. Since the sealing material may be sticky, it may serve as an adhesive to a certain extent, thus preventing the frame from flipping away.

## Claims

1. Fuel or reformer cell (100) comprising a first and a second flow-field plate (130b, 130a), wherein a boundary area (150b) of the first flow-field plate (130b) is crimped or spun over to at least partially encompass a boundary area (150a) of the second flow-field plate (130a).

2. Fuel or reformer cell (100) of claim 1 comprising an electrical isolator (160) arranged between the boundary area (130b) of the first flow-field plate (130b) and the boundary area (150a) of the second flow-field plate (130a).

3. Fuel or reformer cell (100) of claim 2 wherein the electrical isolator (160) is a plastics film.

4. Fuel or reformer cell (100) of claim 2 or 3 wherein the electrical isolator (160) is based on polyimide.

5. Fuel or reformer cell (100) of any preceding claim comprising at least one line of sealant (180a - 180d) arranged between the boundary areas (150a, 150b) of the first and second flow-field plates (130a, 130b).

6. Fuel or reformer cell (100) of claim 5 comprising a first and a second line (180b, 180d) of sealant, said first line attached (180d) to the boundary area of the first flow-field plate (130b) and said second line (180b) attached to the boundary area of the second flow-field plate (130a), wherein the lines of sealant are arranged misaligned, the two attaching lines thus forming an interleaved sealing.

7. Fuel or reformer cell (100) of any preceding claim wherein the flow-field plates (130a, 130b) serve as anode and cathode.

8. Fuel or reformer cell (100) of any preceding claim comprising an isolating frame (190, 191) encompassed at least partially by the crimped or spun-over boundary area (150b).

9. Fuel or reformer cell (100) of claim 8 wherein the isolating frame exhibits a recess for at least partially taking the boundary area (150a) of the second flow-field plate (130a).

10. Fuel or reformer cell (100) of any preceding claim 8 to 9 wherein the isolating frame (190, 191) exhibits a recess (190b) for taking a line of sealant.

11. Fuel or reformer cell (100) of any preceding claim 8 to 10 comprising a first and a second isolating frame (190, 191), wherein the second isolating frame (191) exhibits a recess (191 c) for taking the first isolating frame (190).
